# EUROPÄISCHE PATENTANMELDUNG

(11) **EP 2 278 175 A2**
(43) Veröffentlichungstag der Anmeldung: **26.01.2011**
(21) Anmeldenummer: 10164281.7
(22) Anmeldetag: 28.05.2010
(51) Int. Cl.: F16B 23/00

(54) **Schraubelement mit unterschiedlichen Antriebssystemen**

(30) Priorität: 22.07.2009 DE 102009034248
(71) Anmelder: SIEMENS AKTIENGESELLSCHAFT, 80333 München (DE)
(72) Erfinder: Kemptner, Stefan, 92272, Freudenberg / Paulsdorf (DE)

(57) **Zusammenfassung**

Die Erfindung betrifft ein Schraubelement (10) mit einem Schraubkopf (13) und einem Gewindekörper, wobei im Schraubkopf (13) drei Antriebssysteme angeordnet sind.

## Beschreibung

Die Erfindung betrifft ein Schraubelement mit einem Schraubkopf und einem Gewindekörper.

Bei einer weit verbreiteten Schraube ist die Vertiefung zum Einsetzen eines Schraubenziehers kreuzförmig gestaltet. Diese Schrauben sind auch als Kreuzschlitzschrauben bekannt. Die Seitenwände der Vertiefung, die zur Übertragung des vom Bediener aufgewandten Drehmoments dienen, verlaufen in einer bestimmten Neigung gegenüber einem Längsschnitt der Schraube. Beim Einleiten eines Drehmoments wird ein Teil der Kraft auf Grund des schrägen Verlaufs in eine Kraft umgeleitet, die den Schraubendreher aus dem Schlitz hinauszudrängen versucht. Bei schwergängigen Schrauben entsteht also eine Tendenz, die den Schraubendreher aus dem Schlitz herausdrückt. Auf diese Weise wird die zum Eindrehen der Schraube zur Verfügung stehende Drehkraft beschränkt. Der schräge Verlauf der Seitenwände ist zur Erzielung einer guten Sitzwirkung und zur Zentrierung beim Einsetzen des Schraubendrehers sinnvoll.

Es ist ebenfalls bekannt, in Schraubköpfen Vertiefungen anzubringen, deren Seitenwände parallel zu der Längsachse der Schraube verlaufen. Hier entsteht zwar keine Kraftkomponente, die den Schraubendreher wieder aus der Vertiefung herausdrückt, jedoch treten hier andere Probleme auf. Um das Einsetzen des Werkzeugs zu ermöglichen, muss dieses eine etwas kleinere Abmessung als die Vertiefung aufweisen. Dies bedeutet, dass um das Werkzeug herum allseits ein Spalt vorhanden sein muss. Beim Einleiten eines Drehmoments tritt dann aber eine Anlage an nur einzelnen Vorsprüngen auf, die in der Regel nur linienförmig ist. Berücksichtigt man nun noch, dass das Werkzeug und/oder die Schraube von der idealen gewünschten Form auf Grund fertigungsbedingter Toleranzen abweichen kann, so können Fälle auftreten, bei denen von mehreren Anlageflächen nur zwei benutzt werden.

Der Nachteil der im Stand der Technik bekannten Schrauben besteht darin, dass der Kunde lediglich zwischen zwei Antriebssystemen wählen kann, die zudem mechanische Verschleißprobleme hervorrufen.

Die Aufgabe der vorliegenden Erfindung besteht demgemäß darin, ein Schraubelement zu schaffen, das mehr als zwei Antriebsysteme aufweist, und dem Kunden eine größere Wahlmöglichkeit bietet.

Erfindungsgemäß wird diese Aufgabe durch ein Schraubelement mit einem Schraubkopf und einem Gewindekörper gelöst, wobei im Schraubkopf drei Antriebssysteme angeordnet sind. Diese Antriebssysteme können beispielsweise ein Schlitz-Antrieb, ein Pozidrive-Antrieb oder ein Torx- beziehungsweise Torx Plus-Antrieb sein.

Eine Schraube weist prinzipiell einen zylindrischen oder kegelförmig zugespitzten Stift oder Bolzen auf, auf dem ein Gewinde aufgebracht ist. Um das Drehen der Schraube zu erleichtern, hat sie in ihrem oberen Ende einen Kopf, in welchem verschiedene Antriebssysteme angeordnet sind. Der Schlitz-Antrieb ist als stegförmige Ausnehmung im Kopf ausgebildet. Das Gewinde kann als schiefe Ebene betrachtet werden, die wendelförmig um den Grundkörper aufgewickelt ist.

Einen weiteren Schraubentyp bilden die Philips-Schrauben. Bei diesen Schrauben verjüngen sich die Flanken des Kreuzschlitzes nach unten hin. Wegen dieser keilförmigen Form tritt beim festen Anziehen einer Philips-Schraube eine Axialkraft (Camout-Effekt) auf, die die Spitze des Schraubendrehers aus dem Schraubenkopf heraus treibt, wenn er nicht mit genügend Druck in den Schraubenkopf hineingepresst wird. Auf diese Weise können sowohl der Schraubendreher als auch der Schraubkopf beschädigt werden, was sich an entstehenden Spänen erkennen lässt. Unter Umständen kann die Schraube so nicht mehr entfernt oder nachgezogen werden. Dieses Problem wurde in der verbesserten Ausführung Pozidrive reduziert. Dort verlaufen die Kreuzschlitzflanken parallel. Allerdings ergibt sich durch die nicht parallelen Flanken ein selbstzentrierender Effekt, der die Schraube durch die aufgebrachte Axialkraft exakt in eine Linie mit dem antreibenden Werkzeug hält, was zum Beispiel für selbst selbstbohrende Schrauben notwendig ist. Unter Anderem aus diesem Grund hat auch das Philips-Profil weiterhin seine Anwendung.

Im Gegensatz zur herkömmlichen Philips-Schraube verjüngen sich bei der Pozidrive-Schraube die vier Klingen des passenden Schraubendrehers nach außen nicht, sondern sind plan parallel angeschliffen. Hier besteht also kein Zusammenhang zwischen axialer Anpresskraft des Werkzeugs auf die Schraube und ihren Anzugsdrehmoment. Beim Anschleifen der Klingen mit rotierenden Kreisscheiben bleibt, wo die Klingen sich kreuzen, ein nach außen zunehmendes Dreiecksprofil stehen. Das bewirkt eine Drehmoment abhängige, im Vergleich zur Philips-Schraube jedoch viel geringere axiale Gegenkraft, die sich weniger für eine sensible Begrenzung des Anzugsdrehmoments über den Andruck des Werkzeugs eignet, aber den Schraubendreher aus dem Schlitz treibt, bevor die Schraube bricht. Ein Unterscheidungsmerkmal von Pozidrive-Schrauben sind die von den inneren Ecken ausgehenden feinen Sternlinien am Schraubenkopf von Pozidrive-Schrauben, die bei Philips-Schrauben nicht vorhanden sind. Auch wenn Pozidrive- und Philips-Schrauben und Werkzeuge ähnlich aussehen, passen sie nur bei der jeweils zugehörigen Sorte und Größe einwandfrei und beschädigen nicht die Schraube. Pozidrive entstand als Weiterentwicklung des Philips-Kreuzschlitzes für das Schrauben bei höheren Geschwindigkeiten mit Drehmoment begrenzten Maschinen. Im Metall- und Maschinenbau wird Pozidrive nur selten verwendet. Praktisch genutzt wird das Pozidrive-System heute gerne bei Senkkopfschrauben für das Handwerk, typischerweise Nagelschrauben und Spax-Schrauben. Nicht verwendet wird Pozidrive allerdings bei Schrauben mit hoher Spitze, da Pozidrive nicht selbst zentrierend ist und daher Schraube und Werkzeug nicht fluchten. Verstärkt geht die Tendenz für Schrauben im Holz verarbeitenden Handwerk zu Torx-Schrauben, da dort praktisch keine Axialkraft mehr aufzubringen ist und auch das maximal übertragbare Drehmoment höher ist.

Torx ist ein Schrauben-Mitnahmeprofil in Vielrundform. Es gilt als eine Weiterentwicklung von Kreuzschlitzschraube (Philips, Pozidrive) und Innensechskant (Inbus) als Werkzeugaufnahme, zum Beispiel in Senkkopfschrauben.

Das Profil ähnelt einem sechszackigen Stern mit abgerundeten Spitzen und Ecken, also einer Wellenform. Das senkrechte Profil schaltet Schwächen anderer Antriebe aus. Die Antriebsflächen verlaufen senkrecht, deshalb treten keine Rückschubkräfte auf (Camout-Effekt). Die großen Antriebsflächen sorgen für optimale Kraftübertragung. Auch sehr hohe Drehmomente können ohne Beschädigung des Kopfes übertragen werden. Das Wellenprofil erleichtert das Aufsetzen des Werkzeugs. Dieses erleichtert es, Akkuschrauber mit hohen Drehmomenten für ein rasches Befestigen mittels Schrauben ohne Beschädigung des Innenprofils der Schrauben zu verwenden. Torx Plus ist wie Torx ein sternförmiges Profil mit sechs Nocken. Diese sind jedoch nicht mehr rund, sondern abgeflacht. Mit der Torx Plus-Form konnten alle vertikalen Seitenwände eliminiert werden. Ein echter Antriebswinkel von 0 Grad gewährleistet damit die beste Verbindung zwischen Bit und Schraube. Der breite Kraftangriff lässt schädliche Radialkräfte gar nicht erst entstehen. Im Vergleich zum klassischen Torx können noch höhere Drehmomente übertragen werden. Camout-Kräfte oder das Abrutschen aus der Schraube gehören mit dem Torx-Profil der Vergangenheit an.

Die erfindungsgemäße Schraube mit drei Antriebssystemen weist mehrere Vorteile auf. Neben dem kundenspezifischen Vorteil, der darin zu sehen ist, dass der Kunde Vorteile beim Automatisieren hat, eröffnet eine derartige Schraube auch neue Märkte. Insbesondere das Torx Plus-Antriebssystem ermöglicht einen vergrößerten Formschluss, eine genaue und optimierte Drehmomentübertragung, einen reduzierten Anpressdruck sowie eine Vergrößerung der Kontaktfläche und eine maximale Überdeckung zwischen Werkzeug und Antrieb. Der schädliche Linienangriff wird durch das Torx Plus-Antriebssystem eliminiert. Außerdem wird der Einsatz dünnwandiger Innenantriebe ermöglicht. Die Werkzeugstandzeit wird verbessert, so dass praktisch keine radiale Beanspruchung vorliegt. Zudem wird ein schneller Werkzeugeingriff ermöglicht und die Drehfestigkeit erhöht. Der bei Kreuzschlitzantrieben typische "Camout-Effekt" bleibt bei Torx Plus-Antriebssystemen aus.

Weitere Vorteile und Ausführungsformen der Erfindung werden nachfolgend anhand von Ausführungsbeispielen sowie anhand der Zeichnung erläutert.

Dabei zeigen schematisch:
Fig. 1 eine perspektivische Darstellung einer aus dem Stand der Technik bekannten Schraube mit zwei Antrieben;
Fig. 2 eine perspektivische Darstellung der erfindungsgemäßen Schraube mit drei Antrieben.

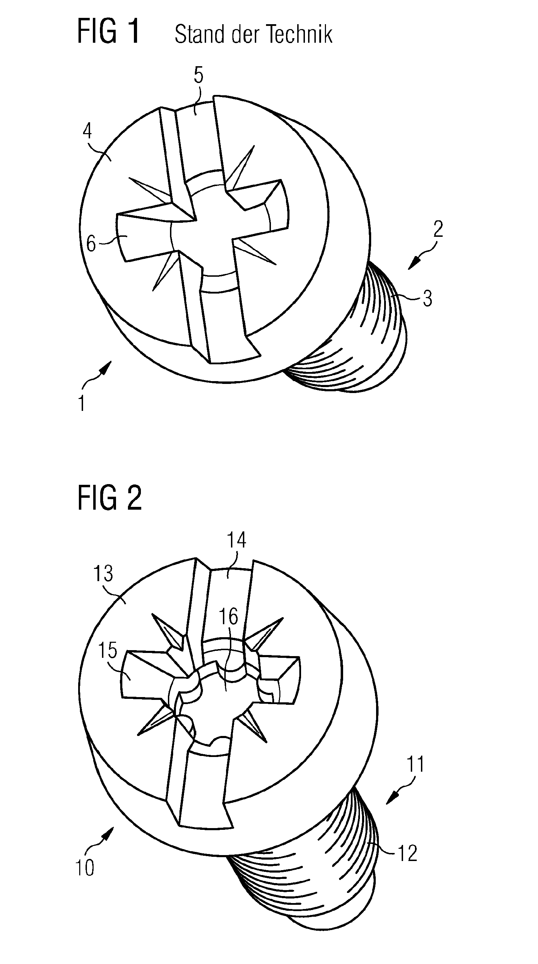

Fig. 1 zeigt eine aus dem Stand der Technik bekannte Schraube 1 mit einem zylindrisch ausgebildeten Stiftkörper 2, auf dem ein Gewinde 3 aufgebracht ist. Um das Drehen der Schraube 1 zu ermöglichen, hat sie an ihrem oberen Ende einen Kopf 4. Im Kopf 4 sind zwei Antriebssysteme, der Schlitz-Antrieb 5 und der Kreuz-Antrieb 6 angeordnet.

Fig. 2 zeigt eine erfindungsgemäße Schraube 10 mit einem zylindrisch ausgebildeten Stiftkörper 11, auf dem ein Gewinde 12 aufgebracht ist. Das Drehen der Schraube 10 wird hier durch drei Antriebssysteme, die im Kopf 13 angeordnet sind, ermöglicht. Die drei Antriebe sind hier der Schlitz-Antrieb 14, der Pozidrive-Antrieb 15 sowie der Torx Plus-Antrieb 16. Der Schlitz-Antrieb 14 ist als stegförmige Ausnehmung im Kopf ausgebildet. Das Pozidrive-Antriebssystem 15 ist ein Kreuzschlitzprofil mit von den inneren Ecken ausgehenden feinen Sternlinien. Das Torx Plus-Antriebssystem 16 ist ein Schrauben-Mitnahmeprofil in Vielrundform. Das Profil ähnelt einem sechszackigen Stern mit abgerundeten Spitzen und Ecken, also einer Wellenform.

Die erfindungsgemäße Schraube mit drei Antriebssystemen weist mehrere Vorteile auf. Neben dem kundenspezifischen Vorteil, der darin zu sehen ist, dass der Kunde Vorteile beim Automatisieren hat, eröffnet eine derartige Schraube auch neue Märkte. Insbesondere das Torx Plus-Antriebssystem ermöglicht einen vergrößerten Formschluss, eine genaue und optimierte Drehmomentübertragung, einen reduzierten Anpressdruck sowie eine Vergrößerung der Kontaktfläche und eine maximale Überdeckung zwischen Werkzeug und Antrieb. Der schädliche Linienangriff wird durch das Torx Plus-Antriebssystem eliminiert. Außerdem wird der Einsatz dünnwandiger Innenantriebe ermöglicht. Die Werkzeugstandzeit wird verbessert, so dass praktisch keine radiale Beanspruchung vorliegt. Zudem wird ein schneller Werkzeugeingriff ermöglicht und die Drehfestigkeit erhöht. Der bei Kreuzschlitzantrieben typische "Camout-Effekt" bleibt bei Torx Plus-Antriebssystemen aus.

## Patentansprüche

1. Schraubelement (10) mit einem Schraubkopf (13) und einem Gewindekörper, **dadurch gekennzeichnet, dass** im Schraubkopf (13) drei Antriebssysteme angeordnet sind.

2. Schraubelement (10) nach Anspruch 1, **dadurch gekennzeichnet, dass** der Schraubkopf (13) ein Schlitz-Antriebssystem (14) aufweist.

3. Schraubelement (10) nach Anspruch 1 oder 2, **dadurch gekennzeichnet, dass** der Schraubkopf (13) ein Pozidrive-Antriebssytem (15) aufweist.

4. Schraubelement nach einem der vorhergehenden Ansprüche, **dadurch gekennzeichnet, dass** der Schraubkopf (13) ein Torx-Antriebssystem aufweist.

5. Schraubelement (10) nach einem der vorhergehenden Ansprüche, **dadurch gekennzeichnet, dass** der Schraubkopf (13) ein Torx Plus-Antriebssystem (16) aufweist.
